# EUROPEAN PATENT SPECIFICATION

(11) **EP 1 032 968 B1**
(45) Date of publication and mention of the grant of the patent: **22.11.2006**
(21) Application number: 98951494.8
(22) Date of filing: 11.09.1998
(51) Int. Cl.: H02M 1/00

(54) **SWITCHED-MODE POWER SUPPLY**
SCHALTNETZTEIL
ALIMENTATION EN PUISSANCE A MODE COMMUTE

(30) Priority: 22.09.1997 DE 19741672; 19.03.1998 DE 19811932
(43) Date of publication of application: 06.09.2000
(73) Proprietor: DEUTSCHE THOMSON-BRANDT GMBH, 78048 Villingen-Schwenningen (DE)
(72) Inventor: REHM, Markus, D-78052 Villingen-Schwenningen (DE); RIESLE, Thomas, D-78052 Villingen-Schwenningen (DE); RODRIGUEZ-DURAN, José, I., D-78050 Villingen-Schwenningen (DE); RILLY, Gerard, D-78089 Unterkirnach (DE)
(74) Representative: Arnold, Klaus-Peter
(86) International application number: PCT/EP1998/006320
(87) International publication number: WO 1999/016163

(56) References cited:
- EP-A- 0 273 622
- EP-A- 0 617 567
- EP-A- 0 704 958
- EP-A- 0 707 376
- US-A- 5 414 238
- US-A- 5 438 497
- PATENT ABSTRACTS OF JAPAN vol. 96, no. 11, 29 November 1996 & JP 08 182327 A (SONY), 12 July 1996
- PATENT ABSTRACTS OF JAPAN vol. 96, no. 10, 31 October 1996 & JP 08 149814 A (SONY CORP.), 7 June 1996
- PATENT ABSTRACTS OF JAPAN vol. 96, no. 10, 31 October 1996 & JP 08 149816 A (SONY CORP.)
- PATENT ABSTRACTS OF JAPAN vol. 18, no. 434 (E-1592), 12 August 1994 & JP 06 133547 A (ORIGIN ELECTRIC)
- ROBERT L.STEIGERWALD: "A Comparison of Half-Bridge Resonant Converter Topologies" IEEE TRANSACTIONS ON POWER ELECTRONICS, vol. 3, no. 2, April 1988, pages 174-182, XP002102113
- PATENT ABSTRACTS OF JAPAN vol. 13, no. 564 (E-860), 14 December 1989 & JP 01 234052 A (NIPPON TELEGRAPH & TELEPHONE CORPORATION), 19 September 1989
- PATENT ABSTRACTS OF JAPAN vol. 13, no. 548 (E-856), 7 December 1989 & JP 01 227662 A (NIPPON TELEGRAPH & TELEPHONE COMPANY), 11 September 1989
- PATENT ABSTRACTS OF JAPAN vol. 96, no. 6, 28 June 1996 & JP 08 033329 A (SANKEN ELECTRIC CO. LTD), 2 February 1996

## Description

The invention is based on a switched-mode power supply of a series resonant converter type as shown in US-A-5,414,238 and having a power factor correction circuit according to the preamble of Claim 1.

Switched-mode power supplies, especially those for devices with a relatively high power consumption, such as video display units, produce a severely pulsed load on the mains lines, which leads to harmonic currents on the mains lines. This load occurs in particular at the voltage peaks of the sinusoidal mains voltage, during which peaks an energy-storage capacitor in the switched-mode power supply is recharged. In order to limit this loading from harmonic currents, new regulations will be introduced in the coming years for devices having a power consumption of more than 70 watts. Future switched-mode power supplies will therefore have to load the mains lines with a more continuous current rather than with a pulsed load. The harmonic load on the mains lines is frequently also specified by a so-called power factor.

Switched-mode power supplies are frequently used for devices which have a normal relatively high power mode and a low-power mode, such as television sets or computer monitors, for example, having a standby mode. In this case, the power consumption of the device is intended to be as low as possible in the standby mode, since this mode is used only to keep the device ready to change as quickly as possible to the normal mode again when use is intended. The switched-mode power supply therefore has to operate over a very wide power range.

Switched-mode power supplies with reduced harmonic loading on the mains have been disclosed, for example, in EP 0 797 288 A1 and in EP-A-0 700 145. These contain a second current path having an inductor which is connected to a capacitor of low capacitance on the input side and, via a diode, to a charge capacitor and to a tap on the primary winding of a transformer. In consequence, when the switched-mode power supply is being operated, an additional second current is drawn from the mains by the switching transistor, and the pulse duration of this second current is considerably broadened by the inductor. A flyback converter is used as the switched-mode power supply in this case, with a switching transistor which is either synchronized to a fixed synchronous frequency or is free-running.

One disadvantage here is that the switching transistor is also loaded with current and voltage, which makes it necessary to use higher ratings. The additional components in the power factor correction circuit, such as the inductor, have relatively high ratings. In addition, the standards are frequently complied with only in the specified test conditions. If the device has a relatively high power consumption, the harmonic load then rises. Furthermore, a free-running switched-mode power supply has the disadvantage that, when the power is relatively low, that is to say at a relatively high switching frequency, more power is drawn from the mains than is required. Since, as a consequence of this, the voltage across the charge capacitor rises further, the switching frequency becomes even higher. Since the voltage across this energy-storage capacitor is not monitored, the switched-mode power supply can enter a critical region. A very low power can thus not be regulated without additional complexity, in the case of a free-running power supply having a power factor correction circuit.

EP-B1-0 275 698 discloses a frequency-limited resonant converter, which operates below the resonant frequency. This contains a resonant circuit on the primary side having a capacitor and an inductance, arranged on the primary winding of the transformer. It also contains two switches which are arranged at one end of the primary winding and are operated in the push-pull mode. A resonant converter allows the switching frequency of the switched-mode power supply to be increased considerably, as a result of which it is possible, in particular, to reduce the size of the transformer in the switched-mode power supply considerably. Principles of resonant converters are dealt with in "SWITCHING POWER SUPPLY DESIGN" by Abraham I. Pressman, McGRAW HILL 1992, pages 471-492.

In EP-B1-0 707 376 a switching power supply circuit of current-resonance type is disclosed which comprises a power factor correction. A separate series resonance circuit is used with a capacitor and a winding of a power insulating transformer which is driven by two switching elements in half bridge configuration. The power factor correction is realised by a second series resonant circuit having a diode in parallel to the resonance capacitor.

In US 5,414,238 a switched mode power supply of a series resonant converter type is described, which comprises two switching transistors being coupled to an input DC voltage and to a primary winding of a transformer for operating as a half bridge converter in a push-pull mode. The primary winding is coupled further via a coil to a series resonance capacity with two capacitors, which are arranged in series and coupled in parallel to the two switching transistors. In Robert L. Steigerwald: "A Comparison of Half Bridge Resonant Converter Topologies" IEEE TRANSACTIONS ON POWER ELECTRONICS, vol. 3, no. 2, April 1988, pages 174 - 182, a similar switched mode power supply is disclosed which operates as a series resonant converter with a capacity being split into two series capacitors, which are coupled to an input DC voltage and via a coil to a primary winding of a transformer.

The object of the present invention is to specify a switched-mode power supply of the type mentioned initially, which contains an efficient and cost-effective power factor correction circuit and which operates, in particular, over a wide output power range.

This object is achieved by the features of claim 1. Advantageous developments of the invention are specified in the dependent claims.

The switched-mode power supply of the invention operates on the series resonant converter principle and it comprises a first capacitor on the primary side to which both a voltage modulated at the mains frequency and a voltage modulated at the switching frequency of the switched-mode power supply are applied. This capacitor is thus part of the resonant circuit and, depending on the load on the output side, the resonant circuit of the resonant converter draws, via the power factor correction circuit, a current from the mains which is proportional to the load and has low harmonics. Since the resonant converter oscillates with a sinusoidal voltage and does not draw any current from the mains or the power factor correction circuit with square-wave signals, as is the case with flyback converters, this method of operation produces very low losses and low interference. This capacitor is connected between the power factor correction circuit and the primary winding of the transformer, and is a component which is a factor in determining the resonant frequency of the resonant converter.

The power factor correction circuit requires only one inductor having low inductance, via which the first capacitor of the resonant circuit or an energy-storage capacitor is recharged, depending on the voltage conditions. It contains a capacitor, which produces current limiting between the inductor and the first capacitor.

A resonant converter based on the series/parallel resonant converter principle is particularly suitable for use as the switched-mode power supply. This can be tuned such that its resonant frequency at a relatively high power level in the normal mode is governed essentially by the series capacitance, and in the low-power mode is governed essentially by the parallel capacitance. In consequence, it is suitable in particular for video display devices having a standby mode.

As a result of the use of two switching transistors as a half bridge, the voltage load across each switching transistor can be kept low, so that cheap field-effect transistors can be used. This makes it possible to use switching frequencies from more than 300 kHz up to about 1 MHz. The use of a half bridge has the further advantage that the transformer is loaded in both magnetization directions, as a result of which the transformer size can be halved and there is no demagnetization during operation.

A series/parallel resonant converter is thus ideally suited for video display devices having a standby mode, such as television sets or computer monitors, for example.

The invention will be explained in more detail in the following text by way of example using the figures, in which:
- Fig. 1: shows a circuit diagram of a series/parallel resonant converter,
- Fig. 2: shows the mains load of the series/parallel resonant converter according to Fig. 1 without a power factor correction circuit, and
- Fig. 3: shows the mains load of the series/parallel resonant converter according to Fig. 1 with a power factor correction circuit.

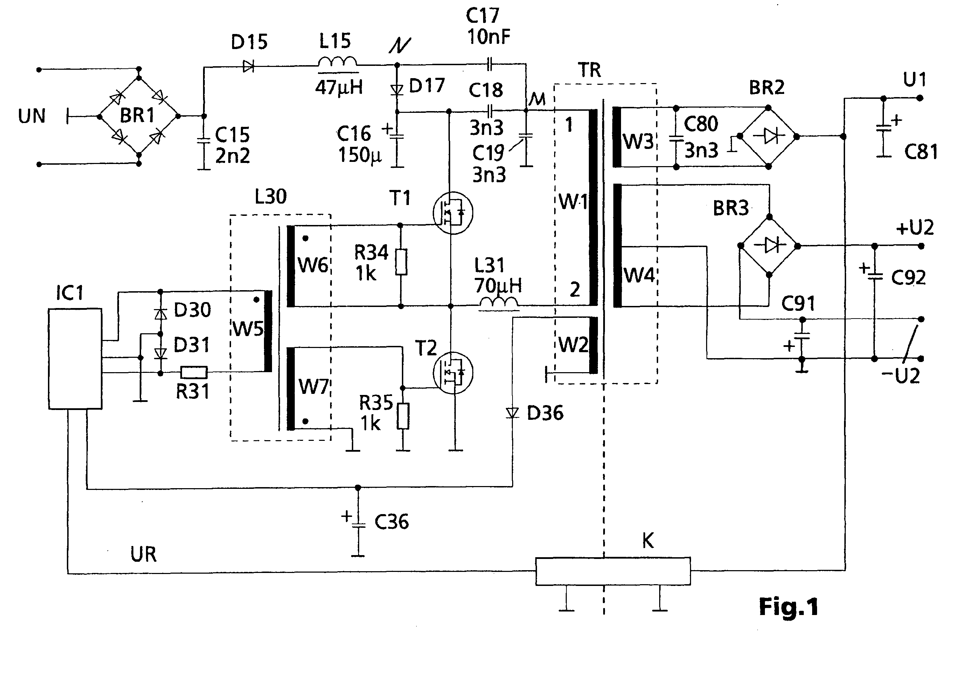

The switched-mode power supply in Fig. 1 contains a first transformer TR having a primary winding W1, a primary auxiliary winding W2 and secondary windings W3 and W4. It produces mains isolation between the primary side and secondary side, although applications without mains isolation are likewise possible. On the input side, the switched-mode power supply contains a rectifier element BR1, which is connected to the mains voltage UN. The winding W1 is arranged as a primary winding, which transmits the power to the secondary windings W3 and W4, on which output-side loads are arranged.

A power factor correction circuit is arranged between the rectifier element BR1 and the primary winding W1 and has a current path via which the two capacitors C18 and C19, which govern the frequency, of a series resonant circuit and a charge capacitor C16 are recharged. The power factor correction circuit contains a filter capacitor C15 of small capacitance, which essentially filters out only the interference. It is connected via a diode D15 to an inductor L15 which works as a choke, and by means of which the current pulses which the switched-mode power supply draws from the mains UN are broadened. Capacitor C15 can be arranged also before rectifier element BR1.

The capacitor C19 draws a current via inductor L15 when its voltage is less than the voltage across the capacitor C15, as a result of which magnetic energy is stored in it at the same time. If the voltage across the capacitor C19 is higher, then the energy in the inductor L15 is passed on via a diode D17 to a charge capacitor C16 of high capacitance, which also supplies the switched-mode power supply with energy. A capacitor C17 of low capacitance is also connected between the inductor L15 and the capacitor C19, and produces current limiting. The capacitor C18, which is likewise an element of the resonant circuit which governs the frequency, is connected between the charge capacitor C16 and the first capacitor C19, and is likewise charged as a function of the voltage conditions on the capacitors C16 and C19. The power factor correction circuit thus charges the capacitors C16, C18 and C19 as a consequence of this, depending on the voltage conditions at that time. The inductor L15 is therefore working as a current pump.

The switched-mode power supply contains two switching transistors T1 and T2, the switching transistor T1 being connected between the two ends 1, 2 of the primary winding W1, and the transistor T2 being connected between a reference potential, in this exemplary embodiment earth, and that end 2 of the winding W1 which faces away from the mains input. The switching transistors operate in the push-pull mode and form a half bridge. This has the advantage that the two transistors have to carry only half the voltage in comparison to a switched-mode power supply having one switching transistor. In this exemplary embodiment, the voltage load on the switching transistors is only a maximum of 400 volts. This is optimum for MOSFET transistors, which are very highly suitable for high switching frequencies and, in addition, are much cheaper for half the withstand voltage and have a lower forward resistance.

The switched-mode power supply operates as a series/parallel resonant converter and contains a series circuit having a coil L31 and capacitors C18 and C19, which govern the frequency. The parallel circuit is arranged on the winding W3, which has a capacitor C80 connected in parallel with it. Stray capacitances and stray inductances which are always present can additionally influence the resonant frequency. The two resonant circuits are in this case tuned such that the parallel resonant frequency is about 330 kHz, and the series resonant frequency is about 230 kHz.

Depending on the load on the switched-mode power supply, the resonances of these resonant circuits are excited differently in this case. If the load on the switched-mode power supply is heavy, the parallel resonant circuit on the winding W3 is heavily damped, so that the switched-mode power supply oscillates essentially via the series resonant circuit. In this case, the series resonant circuit draws a high current from the mains, via the power factor correction circuit.

If the load on the output side of the switched-mode power supply is very low, then the parallel circuit on the winding W3 is only lightly damped. The voltage across the capacitor C19 changes only slightly, in contrast, so that the resonant converter oscillates essentially on the parallel resonant circuit. Since the resonant converter operates above the resonant frequencies, in this exemplary embodiment between 300 kHz for a high load and up to more than 700 kHz for a low load, the transformer TR may be of a very compact design. In addition, the transformer is loaded in both magnetization directions by the half bridge so that, as a result of this, its size can additionally be halved. As a consequence of this, small planar transformers, in particular, may be used which contain a ferrite core and windings on through-plated printed circuit boards.

Since the transformer TR is loaded in both magnetization directions, bridge rectifiers BR2 and BR3 must be arranged on the output side of the windings W3 and W4. In this exemplary embodiment, the winding W3 produces a system voltage U1 and the winding W4 produces two output voltages ±U2 for a television set.

The regulation of the switched-mode power supply is produced by an integrated circuit IC1, which in this case regulates at an output voltage, in this exemplary embodiment the voltage U1, to which the integrated circuit is connected via a coupling element K, for example an optocoupler to provide a mains separation. The switching transistors T1, T2 are driven by the integrated circuit IC1 via a driver transformer L30. On the input side, the driver transformer is connected via its winding W5 to the integrated circuit IC1 and, on the output side, it is connected via two symmetrical windings W6, W7 (which operate in the push-pull mode) to the inputs of the two switching transistors T1, T2. On the input side, diodes D30, D31 and a resistor R31 are arranged at the driver transformer L30 in order to avoid high induction voltages during the switching processes.

The integrated circuit IC1 is supplied with an operating voltage via the winding W2, a diode D36 and a smoothing capacitor C36. The switched-mode power supply also contains a starting circuit, not illustrated in Fig. 1, as is known from earlier switched-mode power supplies.

The switching transistors T1 and T2 are in this case driven by the integrated circuit IC1 in such a manner that the current is discontinuous or has gaps (discontinuous conduction mode, DCM). For example, its duty ratio may be 40% to 40% with a 20% interruption. This makes it impossible for the two switching transistors to be switched on simultaneously in any circumstances.

The regulation characteristic of the series/parallel resonant converter is such that it operates at a high frequency when the load is low and at a low frequency when the load is high. To do this, the integrated circuit IC1 varies the switching frequency as a function of the regulation signal UR.

The switching transistors T1 and T2 thus force an oscillation to occur in a series resonant circuit whose components which govern the frequency are a coil L31 and capacitors C18 and C19, and in the parallel resonant circuit whose components which govern the frequency are a capacitor C80 and a coil L31. Thus, only sinusoidal voltages are present across the capacitors C18 and C19, and the oscillation amplitude of these voltages is proportional to the output load. In consequence, on the one hand only the current which is also actually required is drawn via the power factor correction circuit and, on the other hand, no switching spikes occur. This is a major difference from switched-mode power supplies operating on the flyback converter principle, in which the power factor correction circuit is more complex and, in particular, the components are larger. One particularly disadvantageous feature of a flyback converter is that it has a pure switching mode.

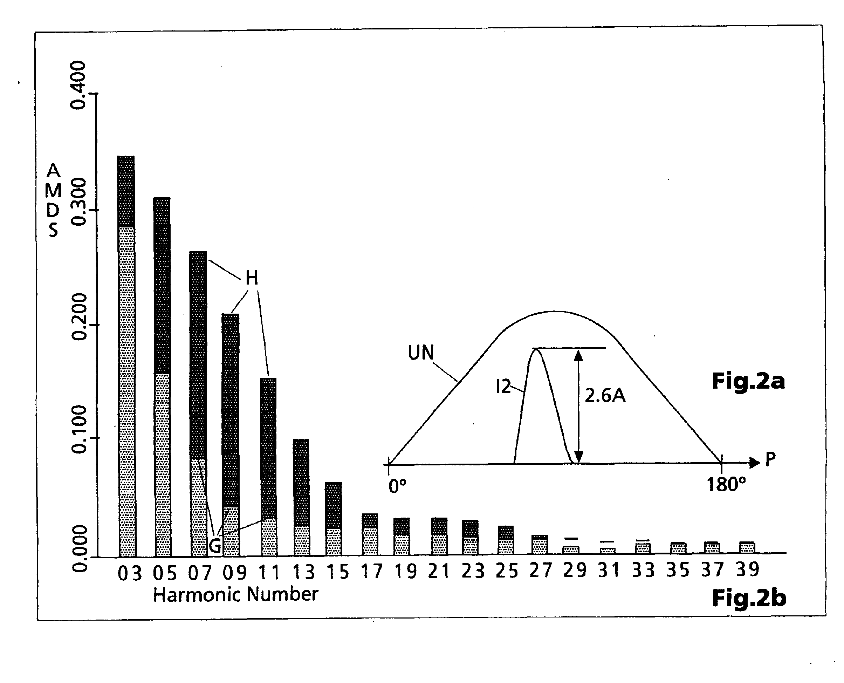

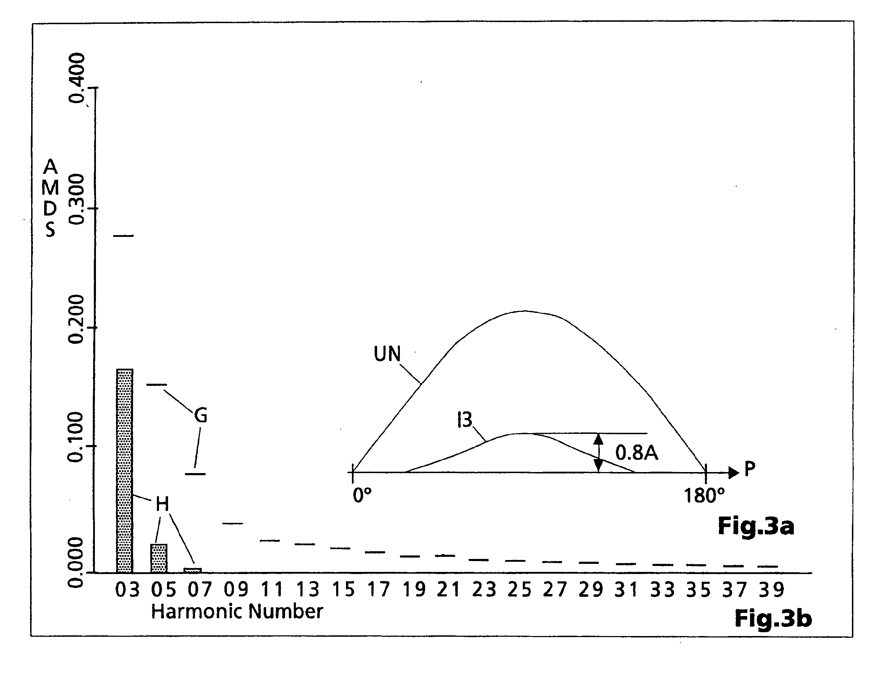

The inductor L15 can in consequence be of a considerably smaller size, and in this exemplary embodiment its volume is only about one fiftieth of that of the inductor in a flyback converter of comparable power. Furthermore, the requirements for power factor correction are considerably less, as is described in the following text with reference to Fig. 2 and Fig. 3. Furthermore, the power factor correction at relatively high power is better and, although this is not required by the future standard, it makes much more sense ecologically. Since a current which is proportional to the load is drawn via the power factor correction circuit, no increase in voltage can occur on the energy-storage capacitor C16.

The capacitance, which governs the frequency, of the series resonant circuit is provided by the two capacitors C18, C19, which are connected as a voltage divider with respect to the energy-storage capacitor C16.

Fig. 2a shows one half cycle of the mains voltage UN, phase P from zero to 180°, as is present, for example, across the filter capacitor C15. The curve I2 is the current which is drawn from the switched-mode power supply in Fig. 1 without a power factor correction circuit, for a power of 65 W at the output U1. This is a sharp, narrow pulse with a high amplitude of 2.6 A, which occurs at the maximum of the mains voltage UN and covers only a small phase range.

Fig. 3a shows the conditions with a power factor correction circuit. The current I3 which is drawn from the mains via the power factor correction circuit now has a very flat profile. Its maximum is now only 0.8 A and it extends over a significant range of the phase. In consequence, the regulations for power factor correction are complied with ease, as is evident from Fig. 3b. The harmonics H are considerably below the limits G and, in particular, are virtually no longer present above the ninth harmonic. Without the power factor correction circuit, the limits G are considerably exceeded, as is evident from Fig. 2b.

In summary, the series/parallel resonant converter with a half bridge has the following advantages: switching frequencies of up to more than 1 MHz are possible since there are no switching-on losses. It is possible to use a small power transformer, based on planar technology, with low losses owing to the high switching frequency (300 kHz - 700 kHz). The maximum voltage across the two switching transistors is 400 V. The regulation range of the series/parallel resonant converter across the frequency range is very wide. For example, the frequency range in the exemplary embodiment is 715 kHz - 310 kHz for an output power of 1 watt to 90 watts and a mains voltage of 268 V to 180 V. The input voltage load variation factor is in this case 134, for a frequency variation factor of about 2.3.

A flyback converter of comparable power has considerably poorer characteristics: the switching frequency of the flyback converter is limited to a maximum of about 150 kHz, since the switching losses become too high as the frequency increases. The power transformer is thus really large, and has relatively high losses. The voltage across the switching transistor is very high (more than 800 V). The regulation range for continuous frequency is limited: for example, its output power is 15 watt to 90 watts for a mains voltage of 264 to 180 V, with a frequency variation from 40 kHz to 150 kHz. In consequence, the input voltage load variation factor in this case is only about 9, for a frequency variation factor of 3.8.

The function of the series/parallel converter is shortly summarised: In the standby mode the voltage drop over capacitors C18, C19 at node M is very low because the output power is very low and the power supply draws only a little current via the power factor correction circuit from mains. But here the capacitor C80 has no damping because the output at U1 draws almost no current. This leads to a stable oscillation between C80 and L31 and a stable switching of the switching transistors T1, T2, working therefore in parallel resonant mode. The capacitor C80 for example may have a reactive power of 20 watts, but this does not contribute to the losses of the power supply when regulating on this reactive load. The reactive load of capacitor C80 increases with the frequency. This has the advantage that for a power range of 1 - 90 W a comparatively small frequency regulating range of about a factor of two is sufficient.

The power factor correction circuit comprises basically a comparatively small inductor L15 which works as a current pump driven by the series resonant circuit. The inductor provides a current to a node N which is coupled via diode D17 with the charge capacitor C16 and with node M in the series resonant circuit. When the voltage at node M is high the current of inductor L15 is fed to charge capacitor C16 and when the voltage at node M is low said current is fed also to capacitors C18 and C19, via small capacitor C17. Because the voltage oscillation at node M is proportional to the output load of the power supply, the current drawn from mains via the power factor correction circuit is load proportional. Working the resonant converter above resonance has the advantage that at higher switching frequencies the current pump L15 is less efficient because of the frequency-dependend inductivity which coincides with the smaller power requirement in the standby mode.

In normal mode the load of voltage U1 draws a high current which leads to a high damping of the parallel resonant circuit which is then no more relevant. Now the series resonant circuit C18, C19, L31 is active because the load of the power supply U1, ±U2, draws a high current from mains. The oscillation at node M draws a current via inductor L15 when the voltage at node M is low. Is the voltage at node M high, the inductor L15 feeds the inductive current via diode D17 to storage capacitor C16. The diode D15 is advantageous because the capacitor C15 is small and suppresses only switching noise. The voltage above C15 is therefore similar to a rectified sinusoidal voltage of twice the mains frequency. With diode D15 a reverse current is avoided which would lead to unnecessary losses in inductor L15.

When MOSFET T1 switches open a current flows from capacitor C16 via T1 and L31 and W1 to capacitors C18, C19 which charge up therefore. When T1 closes the current continues to flow via the diode of MOSFET T2. The switching of MOSFETs T1, T2 is discontinous with a time gap between switching T1 closed and switching T2 open. This avoids under all circumstances that both MOSFETs T1, T2 are open.

When MOSFET T2 switches open a current flows from capacitors C18, C19 via W1, L31 and T2 to ground. When T2 closes the current continues to flow via the diode of MOSFET T1 to capacitor C16 because of the inductivity of L31. Then the next cycle begins with opening MOSFET T1.

Capacitor C18 could be avoided in principle by using a capacitor C19 with the sum capacity, e. g. twice the capacity of C19 when their capacity values are equal. Two capacitors have the advantage that the thermal load is split. Capacitor C17 avoids that a current flows back from node M via diode D17 to capacitor C16 and works also as a current limiter for the power factor correction circuit.

## Claims

1. Switched-mode power supply of a series resonant converter type and designed as a half bridge converter with a first and a second switching transistor (T1, T2) operating in a push-pull mode, comprising
a rectifier element (BR1) for mains voltage rectification,
a first transformer (TR) with a primary winding (W1) and at least one secondary winding (W3, W4) for an output-side load,
a power factor correction circuit (D15, L15) connected at the input side to the rectifier element (BR) and at the output side
via a diode (D17) to an energy-storage capacitor (C16) for recharging and to one end of the serially connected first and second switching transistors (T1, T2), and
to one end of said primary winding (W1) via a current limiting capacitor (C17),
a first capacitor (C18, C19) and a coil (L31), being components for determining the resonant frequency of the series resonance,
said first capacitor (C18, C19) being coupled to the one end of said primary winding (W1),
the junction between said first and the second switching transistor (T1, T2) being coupled via said coil (L31) to the other end of the primary winding (W1),
said coil (L31) forming a series resonant circuit with said first capacitor (C18, C19) via said primary winding (W1) for transferring energy to said secondary winding (W3, W4), so that during operation of the converter said power factor correction circuit (D15, L15) is recharging said first capacitor (C18, C19) via the current limiting capacitor (C17) such that both a voltage modulated at the mains frequency and a voltage modulated at the switching frequency of the switched-mode power supply are applied to said first capacitor (C18, C19).

2. Switched-mode power supply according to Claim 1, **characterized in that** the switched-mode power supply draws a current from the mains which is proportional to the load and has low harmonics, via the power factor correction circuit (D15, L15, D17, C17) and as a function of the voltage present at the first capacitor (C18, C19).

3. Switched-mode power supply according to Claim 2, **characterized in that** the power factor correction circuit comprises a filter capacitor (C15) of low capacitance which is connected to the bridge rectifier (BR1), and an inductor (L15) which is connected via a diode (D15) to the filter capacitor (C15).

4. Switched-mode power supply according to one of the preceding Claims, **characterized in that** the the first and the second switching transistor (T1, T2) are field-effect transistors (T1, T2).

5. Switched-mode power supply according to Claim 1, **characterized in that** the switching transistors (T1, T2) are driven by an integrated circuit (IC1) via a driver transformer (L30) which, on the output side, contains two symmetrical windings (W6, W7) for push-pull operation.

6. Switched-mode power supply according to Claim 4 or 5, **characterized in that** one of the two switching transistors (T1) is connected between the two connections (1, 2) of said primary winding (W1), and the other (T2) is connected between a reference potential and that end (2) of the primary winding (W1) which faces away from the mains input (UN).

7. Switched-mode power supply according to one of the preceding claims, **characterized in that** it is operating as a series/parallel resonant converter in a normal mode and a low-power mode, for example a standby mode, whose resonant frequency in the normal mode is dominated by the series resonant circuit (C18, C19, L31) and in the low-power mode is dominated by the parallel resonant circuit (C80, L31).

8. Switched-mode power supply according to Claim 7, **characterized in that** the parallel resonant circuit comprises a capacitor (C80) which governs the frequency and is arranged on the output side in parallel with a secondary winding (W3) of said first transformer (TR) whose output voltage (U1) is regulated.

9. Switched-mode power supply according to Claim 7 or 8, **characterized in that** the switching frequency of the resonant converter is held above the resonant frequency by a circuit, in particular by an integrated circuit (IC1), and that the resonance frequency of the parallel resonant circuit (C80, L31) is tuned considerably higher than the resonance frequency of the series resonant circuit (C18, C19, L31) depending on the standby power.

## Patentansprüche

1. Schaltnetzteil, das nach Art eines Serienresonanzwandlers als Halbbrückenwandler mit einem ersten und einem zweiten Schalttransistor (T1, T2) konstruiert ist, und die im Gegentaktmodus arbeiten, der umfasst:
ein Gleichrichterelement (BR1) für die Gleichrichtung der Netzspannung,
einen ersten Transformator(TR) mit einer Primärwicklung (W1) und wenigstens einer Sekundärwicklung (W3,W4) für eine Last an der Ausgangsseite,
einen Power-Faktor-Korrekturschaltkreis (D15,L15), der an der Eingangsseite mit dem Gleichrichterelement (BR1) und an der Ausgangsseite über eine Diode (D17) mit einem Energie-Speicherkondensator (C16) zur Wiederaufladung, und an einem Ende der in Reihe geschalteten ersten und zweiten Schalttransistoren (T1, T2), und mit einem Ende der Primärwicklung (N1) über einen strombegrenzenden Kondensator (C17), einen ersten Kondensator (C18,C19) und eine Spule (L31), die resonanzfrequenzbestimmende Komponenten des Serienresonanzkreises sind, verbunden ist,
der erste Kondensator (C18,C19) mit dem einem Ende der Primärwicklung (W1) verbunden ist,
die Verbindung zwischen den ersten und zweiten Schalttransistoren (T1, T2) über die Spule (L31) mit dem anderen Ende der Primärwicklung (W1) verbunden ist,
die Spule (L31) einen Serienresonanzkreis mit dem Kondensator (C18,C19) über die Primärwicklung bildet, um Energie auf den Sekundärkreis (W2,W3) zu übertragen, so dass während des Betriebes des Wandlers der Power-Faktor-Korrekturschaltkreis (D15,L15) den ersten Kondensator (C18,C19) über den strombegrenzenden Kondensator (C17) wieder auflädt, so dass sowohl eine mit der Netzfrequenz modulierte Spannung und eine mit der Schaltfrequenz des Schaltnetzteils modulierte Spannung an den ersten Kondensator (C18,C19) angelegt wird.

2. Schaltnetzteil nach Anspruch 1, **dadurch gekennzeichnet, dass** das Schaltnetzteil über die Power-Faktor-Korrekturschaltung (D15,L15,D17,C17) und in Abhängigkeit der Spannung, die an dem ersten Kondensator (C18,C19)liegt, einen Strom aus dem Netz zieht, der proportional der Last ist und wenig Oberwellen hat.

3. Schaltnetzteil nach Anspruch 2, **dadurch gekennzeichnet, dass** der Power-Faktor-Korrekturschaltkreis einen Filterkondensator (C15) mit niedriger Kapazität umfasst, der mit dem Brückengleichrichter (BR1) verbunden ist, und eine Drossel (L15), die über eine Diode (D15) mit dem Filterkondensator (C15) verbunden ist.

4. Schaltnetzteil nach einen der vorhergehenden Ansprüche, **dadurch gekennzeichnet, dass** der erste und der zweite Schalttransistor (T1,T2) Feldeffekttransistoren (T1,T2) sind.

5. Schaltnetzteil nach Anspruch 1, **dadurch gekennzeichnet, dass** die Schalttransistoren (T1,T2) durch einen Integrierten Schaltkreis (IC1) über einen Treibertransformator (L30) gesteuert werden, der auf der Ausgangsseite für Gegentaktbetrieb zwei symmetrische Wicklungen (W6,W7) enthält.

6. Schaltnetzteil nach Anspruch 4 oder 5, **dadurch gekennzeichnet, dass** einer der zwei Schalttransistoren (T1) zwischen die zwei Verbindungen (1,2) der Primärwicklung (W1)geschaltet ist, und der andere (T2) zwischen ein Referenzpotential und das von dem Netzeingang (UN) abgewandte Ende (2) der Primärwicklung (W1) geschaltet ist.

7. Schaltnetzteil nach einem der vorhergehenden Ansprüche, **dadurch gekennzeichnet, dass** es in einem normalen Modus als ein Serien/Parallel-Resonanzwandler arbeitet, und in einem Modus mit niedriger Leistung, zum Beispiel einem Standby-Modus, dessen Resonanzfrequenz im Normalbetrieb von dem Serienresonanzkreis (C18,C19,L31) dominiert wird, und in dem Modus mit niedriger Leistung von dem Parallelresonanzkreis (C80,L31) dominiert wird.

8. Schaltnetzteil nach Anspruch 7, **dadurch gekennzeichnet, dass** der Parallelresonanzkreis einen Kondensator (C80) umfasst, der die Frequenz bestimmt und an der Ausgangseite parallel zu einer Sekundärwicklung (W3) des ersten Transformators (TR), dessen Ausgangsspannung (U1) geregelt wird, angeordnet ist.

9. Schaltnetzteil nach Anspruch 7 oder 8, **dadurch gekennzeichnet, dass** die Schaltfrequenz des Resonanzwandlers durch einen Schaltkreis, besonders durch einen Integrierten Schaltkreis (IC1), oberhalb der Resonanzfrequenz gehalten wird, und dass die Resonanzfrequenz des Parallelresonanz-kreises (C80,L31) beträchtlich höher als die Resonanzfrequenz des Serienresonanzkreises (C18,C19,L31) in Abhängigkeit von der Standby-Leistung eingestellt wird.

## Revendications

1. Alimentation en puissance à mode commuté d'un type de convertisseur auto-oscillant en série et conçu comme un convertisseur à demi-pont avec un premier et un deuxième transistor de commutation (T1, T2) fonctionnant dans un mode push-pull, comprenant
un élément de redressement (BR1) pour le redressement de la tension de secteur,
un premier transformateur (TR) avec un enroulement primaire (W1) et au moins un enroulement secondaire (W3, W4) pour une charge côté sortie,
un circuit de correction de facteur de puissance (D15, L5) connecté sur le côté entrée à l'élément de redressement (BR) et sur le côté sortie via une diode (D17) à un condensateur de stockage d'énergie (C16) pour la recharge et à une extrémité des premier et deuxième transistors de commutation connectés en série (T1, T2), et à une extrémité dudit enroulement primaire (W1) via un condensateur de limitation de courant (C17),
un premier condensateur (C18, C19) et une bobine (L31), étant des composants permettant de déterminer la fréquence de résonance de la résonance en série,
ledit premier condensateur (C18, C19) étant couplé à une extrémité dudit enroulement primaire (W1),
la jonction entre ledit premier et le deuxième transistor de commutation (T1, T2) étant couplée via ladite bobine (L31) à l'autre extrémité de l'enroulement primaire (W1), ladite bobine (L31) formant un circuit résonnant en série avec ledit premier condensateur (C18, C19) via ledit enroulement primaire (W1) pour transférer l'énergie audit enroulement secondaire (W3, W4) de sorte que pendant le fonctionnement du convertisseur, ledit circuit de correction de facteur de puissance (D15, L15) recharge ledit premier condensateur (C18, C19) via la condensateur de limitation de courant (C17) de sorte qu'une tension modulée à la fréquence du secteur et une tension modulée à la fréquence de commutation de l'alimentation en puissance à mode commuté soient appliquées audit premier condensateur (C18, C19).

2. Alimentation en puissance à mode commuté selon la revendication 1, **caractérisée en ce que** l'alimentation en puissance à mode commuté prélève du courant du secteur qui est proportionnel à la charge et présente de faibles harmoniques, via le circuit de correction de facteur de puissance (D15, L15, D17, C17) et en fonction de la tension présente sur le premier condensateur (C18, G19),

3. Alimentation en puissance à mode commuté selon la revendication 2, **caractérisée en ce que** le circuit de correction de facteur de puissance comprend un condensateur de filtrage (C15) de faible capacitance qui est connecté au redresseur en pont (BR1) et une bobine d'induction (L15) qui est connectée via une diode (D15) au condensateur de filtrage (C15).

4. Alimentation en puissance à mode commuté selon l'une des revendications précédentes, **caractérisée en ce que** les premier et deuxième transistors de commutation (T1, T2) sont des transistors à effet de champ (T1, T2).

5. Alimentation en puissance à mode commuté selon la revendication 1, **caractérisée en ce que les** transistors de commutation (T1, T2) sont commandés par un circuit intégré (IC1) via un transformateur d'attaque (L30) qui, sur le côté sortie, contient deux enroulements symétriques (W6, W7) pour le fonctionnement push-pull.

6. Alimentation en puissance à mode commuté selon la revendication 4 ou 5, **caractérisée en ce que** l'un des deux transistors de commutation (T1) est connecté entre les deux connexions (1, 2) dudit enroulement primaire (W1) et l'autre (T2) est connecté entre un potentiel de référence et l'extrémité (2) de l'enroulement primaire (W1) qui est orientée à l'opposé de l'entrée de secteur (UN).

7. Alimentation en puissance à mode commuté selon l'une des revendications précédentes, **caractérisée en ce qu'**elle fonctionne comme un convertisseur auto-oscillant série/parallèle dans un mode normal et un mode de faible puissance, par exemple, un mode veille, dont la fréquence de résonance en mode normal est dominée par le circuit résonnant en série (C18, C19, L31) et en mode de faible puissance est dominée par le circuit résonnant parallèle (C80, L31).

8. Alimentation en puissance à mode commuté selon la revendication 7, **caractérisée en ce que** le circuit résonnant parallèle comprend un condensateur (C80) qui détermine la fréquence et est disposé sur le côté sortie en parallèle avec un enroulement secondaire (W3) dudit premier transformateur (TR) dont la tension de sortie (U1) est régulée.

9. Alimentation en puissance à mode commuté selon la revendication 7 ou 8, **caractérisée en ce que** la fréquence de commutation du convertisseur auto-oscillant est maintenue au-dessus de la fréquence de résonance par un circuit, en particulier par un circuit intégré (IC1), et **en ce que** la fréquence de résonance du circuit résonnant parallèle (C80, L31) est syntonisée largement au-dessus de la fréquence de résonance du circuit résonnant en série (C18, C19, L31) selon le mode veille.
